(19) Europäisches Patentamt
European Patent Office
Office européen des brevets

(11) Publication number: 0 306 016 A1

(12) # EUROPEAN PATENT APPLICATION

(21) Application number: 88114251.7

(22) Date of filing: 01.09.88

(51) Int. Cl.4: C08K 13/06 , C08L 23/08 , C08L 23/16 , //(C08K13/06, 5:37,5:18,9:04)

(30) Priority: 01.09.87 US 92312

(43) Date of publication of application: 08.03.89 Bulletin 89/10

(84) Designated Contracting States: CH DE FR GB IT LI

(71) Applicant: E.I. DU PONT DE NEMOURS AND COMPANY
1007 Market Street
Wilmington Delaware 19898(US)

(72) Inventor: Vaidya, Upen Ishwarlal
14 Edgebrook Way
Newark Delaware 19702(US)

(74) Representative: Abitz, Walter, Dr.-Ing. et al
Abitz, Morf, Gritschneder, Freiherr von Wittgenstein Postfach 86 01 09
D-8000 München 86(DE)

(54) **Flame retardant ethylene copolymer composition.**

(57) A composition containing a selected ethylene copolymer, a specially treated magnesium hydroxide and acetone/diphenylamine stabilizer provides a flame retardant composition, good wet-electrical stability.

EP 0 306 016 A1

# FLAME RETARDANT ETHYLENE COPOLYMER COMPOSITION

## BACKGROUND OF THE INVENTION

Good electrical stability when wet; i.e., no or little loss of power factor, is a goal sought after in compositions useful as protective coatings on electrical wire. At the same time, low smoke generation and good flame retardant properties are desirable in such compositions.

This invention provides coating compositions for such wire and cable use that have the combination of properties recited above.

## SUMMARY OF THE INVENTION

A flame retardant composition having good wet electrical stability consisting essentially of:

a) 100 parts by weight of (i) a cross-linkable ethylene/propylene copolymer, or (ii) an ethylene vinyl acetate copolymer, or (iii) an ethylene/(meth)acrylate copolymer; or 100 parts of a blend of two or more (i), (ii) or (iii);

b) Between 100 and 200 parts by weight of magnesium hydroxide having (i) a strain in the <101> direction of not more than 3.0 x $10^{-3}$, (ii) a crystallite size in the <101> direction of more than 800 A and (iii) a specific surface area of less than 20 $m^2/g$, said magnesium hydroxide being coated on the particle surface with an anionic surfactant;

c) 1-5 parts by weight of either mercaptotoluimidazole, mercaptobenzimidazole, the zinc salt of mercaptotoluimidazole, or the zinc salt of mercaptobenzimidazole;

d) 0.5-5 parts by weight of the reaction product of acetone and diphenyl amine.

This combination of materials provides excellent long-term electrical properties when molded parts of the combination are subjected to wet (aqueous) conditions. For example, loss of power factor is unexpectedly much less than that of a composition containing only the ethylene/propylene copolymers and the coated magnesium hydroxide. Loss of power is also much less than that of a composition in which the coated magnesium hydroxide is replaced with untreated magnesium hydroxide. Thus, presence of components (b), (c), and (d) provides a synergistic effect in this regard.

## DESCRIPTION OF THE INVENTION

The polymer component of the composition can be any elastomeric ethylene/propylene dipolymer or ethylene/propylene/ diene terpolymer or tetrapolymer. Such dipolymers are known as EPM elastomers, while terpolymers and tetrapolymers are known as EPDM elastomers; the EPM and EPDM designation are accepted terms, wherein M stands for a rubber having a saturated chain of the polymethylene type (see, for example, ASTM designation D-1418-72a); and several types of EPM and EPDM elastomers are known or are commercially available. EPDM elastomers are copolymers of ethylene with propylene and with a nonconjugated diene having one reactive double bond. They may, in addition, contain a minor amount of a second diene, which may have two reactive double bonds. The diene of the first type may be, for example, 1,4-hexadiene, 2-methyl-1,5-hexadiene, 1,9-octadecadiene, dicyclopentadiene, tricyclopentadiene, 5-ethylidene-2-norbornene, and 5-methylene-2-norbornene. The diene of the second type may be, for example, 1,4-pentadiene, 1,5-hexadiene, 1,7-octadiene, 5-(5-hexenyl)-2-norbornene, 2,5-norbornadiene, and 5-(2-propenyl)-2-norbornene. EPDM elastomers of both terpolymer and tetrapolymer type can be obtained from E. I. du Pont de Nemours and Company, Wilmington, DE, U.S.A. Most commercial EPDM elastomers contain about 50-75 weight % of ethylene and 1-6 weight % of diene or dienes, the remainder being propylene. Such elastomers are suitable in the structures and the method of this invention. Those monomer proportions, however, are not considered critical.

Ethylene/propylene dipolymers are available, among others, from EXXON, Copolymer Corporation, B. F. Goodrich, and Uniroyal. Both EPDM and EPM elastomers can be made according to the techniques described in a review article by F. P. Baldwin et. al., in Rubber Chemistry and Technology, Vol. 45, pp 709-881 (1972).

The polymeric component of the composition may also be an ethylene vinyl acetate copolymer. The ethylene vinyl acetate copolymers have a vinyl acetate content of from about 6 to 40 weight percent. They are prepared by a high pressure polymerization process in which ethylene and an an appropriate amount of vinyl acetate are polymerized at a temperature of 120° C to 225° C and at a pressure of 20,000 to 30,000 psi, optionally in the presence of an appropriate amount of a chain transfer agent, to give the desired melt index to the ethylene vinyl acetate product according to methods well-known in the art. The polymerization may be effected in a conventional autoclave or tubular reactor. Ethylene vinyl acetate polymers suitable for use in the process of the present invention are available from several sources, including E. I. du Pont de Nemours and Company.

The ethylene/(meth)acrylate polymers suitable for use in the compositions of this invention are copolymers comprising 60 to 94 weight percent ethylene and 6 to 40 weight percent of an alkyl (meth)-acrylate wherein the alkyl group contains 1 to 4 carbon atoms, preferably 2 carbon atoms. These copolymers are well-known and may be prepared, for example, according to methods described in British Patent 915,240; and in U.S. Patents 2,953,541; 2,953,551; and 3,350,372.

Blends of two or more of the above-described polymers in any proportions may also be used as the polymeric component. The blends are prepared by mixing in a high-shear device, such as a Banbury mixer or on a two-roll rubber mill at temperatures of 70 to 120° C.

In addition to the polymeric component or components, the composition of the invention also contains 100-200 parts by weight of magnesium hydroxide. The preferred range of magnesium hydroxide is 150-200 parts for all ethylene/propylene elastomer compositions and 100-150 parts for compositions containing ethylene vinyl acetate or ethylene/(meth)acrylate copolymers. The magnesium hydroxide used herein is described in U.S. Patent No. 4,098,762, and is available from Kyowa Chemical Company, Ltd., Tokyo, Japan under the tradename KISUMA-5 hydrated magnesium fire retardant.

The magnesium hydroxide has a strain, in the <101> direction, of not more than $3.0 \times 10^{-3}$, a crystallite size in the <101> direction of more than 800 A, and a specific surface area determined by the BET method of less than 20 $m^2/g$. The magnesium hydroxide is treated with an anionic surface active agent to form solid particles of magnesium hydroxide coated with surfactant.

The anionic surface active agent used to coat the magnesium hydroxide of this invention includes, for example, alkali metal salts of higher fatty acids of the formula

RCOOM

wherein R is an alkyl group containing 8 to 30 carbon atoms, and M is an alkali metal atom; alkyl sulfate salts of the formula

$ROSO_3M$

wherin R and M are the same as defined above; alkylsulfonate salts of the formula

$RSO_3M$

wherein R and M are the same as defined above; alkylaryl sulfonate salts of the formula

R-aryl-$SO_3M$

wherei R and M are the same as defined above, and sulfosuccinate ester salts of the formula

$$\begin{array}{l} ROCOCH_2 \\ \quad\;\; | \\ ROCOCHSO_3M \end{array}$$

wherein R and M are the same as defined above.

Mercaptotoluimidazole, mercaptobenzimidazole and their zinc salts are available commercially from Bayer or R. T. Vanderbilt Co.

The acetone/diphenyl amine eaction product is available commercially from Uniroyal. It is the product of a low temperature condensation reaction product between acetone and diphenylamine and is a solid having

a melting point of 85-95° C.

The blends of the invention may be further compounded with pigments, fillers, processing aids, and curing agents. These additives are usually present in amounts of 15 to 25 parts per hundred parts polymer. Representative fillers include carbon black, calcium carbonate, calcined clay, hydrated silicas and talc. Representative pigments include titanium dioxide and zinc oxide. Processing aids which may be added to the composition include hydrocarbon oils, stearic acid, and waxes.

The polymer blend may also be compounded with conventional peroxide curing agents and accelerators. Representative peroxide curing agents include compounds such as dicumyl peroxide; 2,5-dimethyl-2,5-di(t-butylperoxy)hexyne-3; 2,5-dimethyl-2,5-di-(t-butylperoxy)hexane; di-t-butyl peroxide; 2,5-di-(t-amylperoxy)-2,5-dimethylhexane; 2,5-di(t-butylperoxy)-2,5-diphenylhexane; bis(alpha-methylbenzyl)peroxide; and bis-(t-butylperoxy)diisopropylbenzene. The amounts used are generally from about 1-8 parts per 100 parts polymer, usually about 2 to 5 parts per 100 parts polymer.

Coagents can be used during the peroxide curing procedure. Such coagents are well known in the art and include, for example, triallylisocyanurate, triallylcyanurate, N,N′-m-phenylenedimaleimide, and the like.

The compositions of the invention are prepared by mixing the polymer, magnesium hydroxide, acetone/diphenylamine reaction product, and mercapto compound, along with any additional additives, in a high shear mixing device, such as a Banbury mixer or on a two-roll rubber mill at temperatures of 70 to 120° C. If curing agents are added to the composition, the mixing should be done at temperatures below 125° C to prevent scorch.

The use of the specific magnesium hydroxide described herein in combination with the two component stabilizer system, i.e. mercapto compound and acetone/diphenylamine reaction product, imparts very desirable properties to these thermosetting insulation compositions such as high oxygen index for flame retardancy, low smoke emission, good heat resistance and dramatic improvement in wet electrical stability at elevated temperatures of 75 and 95° C. This desirable wet electrical stability, in combination with good flame retardance and low smoke emission, in compositions containing no halogen additives, provides high value in cable applications.

## EXAMPLES

### Example 1

A sample of 1300 g of a 20/80 blend of an ethylene/propylene/1,4-hexadiene/norbornadiene (E/P/HD/NB) polymer (wt ratio 55/40/3.0-3.5/1.5-2.0) and an ethylene/ propylene/1,4-hexadiene (E/P/HD) polymer (wt ratio 57/40/3) was added to a water-cooled Banbury mixer along with 2210 gms of magnesium hydroxide ("Kisuma-5" having the characteristics described further above), 13 gms of vinyl tris(beta-ethoxymethoxy)silane, 65 g of zinc oxide, 65 g dibasic lead phthalate, 26 g zinc salt of mercaptotoluimidazole, 13 g acetone/diphenylamine reaction product, and 34 g dicumyl peroxide. The composition was mixed for 5-6 minutes. The mixed stock was discharged at 110° C onto a two-roll rubber mill whose roll temperature was maintained at 25-30° C.

A No. 14 AWG solid copper wire was coated by extruding and steam vulcanizing in high pressure steam for 30 seconds to one minute at 240 psi (1.65 MPa) with the compounded composition. The following electrical properties of this coating were measured; specific inductive capacitance, percent power factor, and insulation resistance after 16 hours at 15.6° C according to UL Subject 44. These properties were measured again after 24 hours, 1 week, 2 weeks; and after 1,2,3,4,5, and 6 months immersion in 75° C and 90° C water according to UL Subject 44 and ICEA-S-68-516 Standard.

Slabs of the compositions were prepared having the dimensions of 152 x 152 x 3.2 mm. These slabs were tested for (i) smoke generation according to ASTM E-662, (ii) oxygen index according to ASTM D-2863 measurement, (iii) moisture absorption after 7 days in 70° C water according to ASTM D-470, and (iv) tear strength according to ASTM D-470. Results of these tests are shown in Table 1. The composition was also tested for Mooney viscosity,according to ASTM D-1646. Results of the NBS smoke density test according to ASTM E-662 are also shown in Table 1.

TABLE 1

| | Parts by Weight |
|---|---|
| E/P/HD/NB Polymer[1] | 20 |
| E/P/HD Polymer[2] | 80 |
| Magnesium hydroxide("Kisuma-5" from Kyowa Chemical Co. | 170 |
| Vinyl Tris(beta-ethoxymethoxy) silane | 1 |
| Dibasic Lead Phthalate | 5 |
| Zinc Salt of Mercaptotoluimidazole | 2 |
| Acetone/Diphenylamine Reaction Product | 1 |
| Paraffin Wax | 2 |
| Dicumyl Peroxide | 2-6 |

1. Ethylene/propylene/1,4-hexadiene/norbornadiene copolymer, (wt. ratio 55/40/3.0-3.5/1.5-2.0)
2. Ethylene/propylene/1,4-hexadiene copolymer, wt. ratio 47/40/3

| | |
|---|---|
| Mooney Viscosity ML 1+4 at 100°C | 35-40 |
| Oxygen Index | 30 |
| Tear Strength (Pli) N/mm | (40) 7.0 |
| NBS Smoke Density | |
| Flaming, $D_4$ | 5 |
| Flaming, $D_{max}$ | 245 |
| Nonflaming, $D_4$ | 15 |
| Nonflaming, $D_{max}$ | 395 |
| Moisture Absorption 7 days/70°C Water, $mg/in^2$ | 4-5 |

#14 AWG solid copper conductor wire was coated with 0.76 mm of the composition in Table 1 and cured at 45 seconds in 205° C pressurized steam.

| Electrical Properties | Volts/mm | |
|---|---|---|
| The electrical properties were determined at two voltage stress levels; namely 1575 volt/mm and 3150 volt/mm by immersing in water for 16 hours at 15.6°C, with the following results: | 1575 | 3150 |
| Specific Inductive Capacitance | 3.39 | 3.40 |
| Power Factor (%) | 0.50 | 0.51 |
| Insulation Resistance [Megohms/km] | 4570 | 4570 |
| | Volts/mm | |
| The same properties were measured at 75°C water, with the following results: | 1757 | 3158 |
| Specific Inductive Capacitance | | |
| 1 Day | 3.53 | 3.53 |
| 7 Days | 3.60 | 3.61 |
| 14 Days | 3.62 | 3.62 |
| Power Factor (%) | | |
| 1 Day | 1.70 | 1.71 |
| 7 Days | 1.50 | 1.54 |
| 14 Days | 1.71 | 1.93 |
| Insulation Resistance (megohms/km) | | |
| 1 Day | 10.7 | 10.7 |
| 1 Week | 15.2 | 15.2 |
| 2 Weeks | 19.5 | 19.5 |
| 3 Weeks | 21 | 21 |
| 4 Weeks | 21 | 21 |
| 5 Weeks | 22.2 | 27.2 |
| 6 Weeks | 23.4 | 23.4 |

Example 2

A sample of 1550 g of a 10/90 blend of an ethylene/propylene/1,4-hexadiene/norbornadiene polymer (wt ratio 70/25/3.5-4.0/1-1.5) and an ethylene vinyl acetate (E/VA) copolymer (18 wt percent vinyl acetate, melt index 2.5) was added to a water-cooled Banbury mixer along with 1780 g of the magnesium hydroxide used in Example 1, 16 g of vinyl tris(beta-ethoxymethoxy)silane, 78 g of zinc oxide, 78 g of dibasic lead phthalate, 31 g of the zinc salt of mercaptotoluimidazole, 16 g of acetone-diphenyl amine reaction product, and 31 g of dicumyl peroxide. The composition was mixed for 5-6 minutes. The mixed stock was discharged at 115-120°C onto a two-roll rubber mill whose roll temperature was maintained at 70-75°C. The composition was sheeted off and test samples were prepared. The compounded polymer composition was coated onto No. 14 wire as described in Example 1 and specific inductive capacitance, percent power factor, and insulation resistance were tested. Results are shown in Table 1. The same sample preparation as described in Example 1 was used to prepare slabs for testing oxygen index, smoke generation, moisture absorption, tear strength and Mooney viscosity of the Example 2 compositions. Results of these tests may also be found in Table 2.

TABLE 2

| | Parts by Weight |
|---|---|
| E/P/HD/NB Polymer[1] | 10 |
| Ethylene Vinyl Acetate[2] | 90 |
| "Kisuma-5" Magnesium Hydroxide | 100 |
| Vinyl Tris(beta-ethoxymethoxy)silane | 1 |
| Zinc Oxide | 5 |
| Dibasic Lead Phthalate | 5 |
| Zinc Salt of Mercaptotoluimidazole | 2 |
| Acetone/Diphenylamine Reaction Product | 1 |
| Paraffin Wax | 2 |
| Dicumyl Peroxide | 2 |

1. Ethylene/Propylene/1,4-hexadiene/Norbornadiene Copolymer, (Wt. ratio 70/25/3.5-4.0/1-1.5)
2. 18 wt. % vinyl acetate, melt index 2.5

| | |
|---|---|
| Mooney Viscosity ML 1+4 at 100°C | 20 |
| Oxygen Index | 30 |
| Tear Strength | 70 |
| NBS Smoke Density | |
| Flaming, $D_4$ | 0 |
| Flaming, $D_{max}$ | 85 |
| Nonflaming, $D_4$ | 30 |
| Nonflaming, $D_{max}$ | 250 |

#14 AWG solid copper conductor wire was coated with 0-76 mm of the composition shown in Table 2 and cured at 45 seconds in 200° C pressurized steam.

| Electrical Properties | Volts/mm | |
|---|---|---|
| The electrical properties were determined as in Example 1 with the following results: | 1575 | 3150 |
| Specific Inductive Capacitance | 3.40 | 3.42 |
| Power Factor (%) | 0.49 | 0.53 |
| Insulation Resistance [Megohms/km] | 3048 | 3040 |
| | Volts/mm | |
| The same properties were measured at 75° C with the following results: | 1575 | 3150 |
| Specific Inductive Capacitance | | |
| 1 Day | 3.93 | 3.95 |
| 7 Days | 3.99 | 4.01 |
| 14 Days | 4.02 | 4.03 |
| Power Factor (%) | | |
| 1 Day | 1.79 | 1.84 |
| 7 Days | 1.77 | 1.90 |
| 14 Days | 1.83 | 1.93 |
| Insulation Resistance (megohms/km) | | |
| 1 Day | 42.6 | 42.6 |
| 1 Week | 51.2 | 51.2 |
| 2 Weeks | 53 | 53 |
| 3 Weeks | 45.5 | 45.5 |
| 4 Weeks | 51 | 51 |
| 5 Weeks | - | - |
| 6 Weeks | 57.6 | 57.6 |

Example 3

A 1400 g sample of an ethylene/propylene/1,4-hexadiene polymer (wt. ratio 57/40/3) was added to a water-cooled Banbury mixer along with 1960 g of the magnesium hydroxideused in Example 1, 28 g mercaptotoluimidazole, 14 g acetone/diphenylamine reaction product, 14 g vinyl tris(beta-ethoxymethoxy)-silane, 70 g zinc oxide,70 g dibasic lead phthalate, 28 g paraffin wax, and 28 g dicumyl peroxide. The composition was mixed for 5-6 min. The mixed stock was discharged at a temperature of 110° c onto a two-roll rubber mill whose roll temperature was maintained at 25-30° C. The composition was sheeted off and test samples were prepared as described in Example 1 for specific inductive capacitance, power factor and insulation resistance. Results are shown in Table 3.

Comparative Example 3A

An elastomer composition was prepared using the same ingredients, in the same amounts, as that described in Example 3, except that commercially available technical grade magnesium hydroxide from Morton Thiokol was used in place of the "Kisuma-5" magnesium hydroxide. Test samples were prepared as described in Example 1 and specific inductive capacitance, power factor, and insulation resistance were measured. Results are shown in Table 3.

Comparative Example 3B

A further comparative composition was prepared using the same ingredients, in the same amounts, as that described in Example 3, except that in this case, 1400 g of alumina was added in place of the "Kisuma-5" magnesium hydroxide. Test sample preparation and measurements were performed as described in Example 3. Results are shown in Table 3.

Comparative Example 3C

An elastomer composition was prepared in the same manner, using he same ingredients, in the same amounts as described in Example 3, except that in this case no mercaptotoluimidazole or acetone/diphenylamine reaction product were used. Instead, 21 g of polymerized 1,2 dihydro-2,2,4-trimethylquinoline (Agerite Resin D) was used. Test sample preparation and measurements were performed as described in Example 3. Results ae shown in Table 3.

TABLE 3

| | Example 3 | Comparative Example 3A | Comparative Example 3B | Comparative Example 3C |
|---|---|---|---|---|
| | | (Parts by Weight) | | |
| E/P/HD[1] | 100 | 100 | 100 | 100 |
| "Kisuma-5" Magnesium Hydroxide | 140 | - | - | 140 |
| Tech. Grade Magnesium Hydroxide | - | 140 | - | - |
| Mercaptotoluimidazole | 2 | 2 | 2 | - |
| Acetone/Diphenylamine Reaction Product | 1 | 1 | 1 | 1 |
| Aluminum Hydroxide | - | - | 100 | - |
| Polymerized 1,2-dihydro-2,2,4-Trimethylquinoline | - | - | - | 1.5 |
| Vinyl Tris(beta-ethoxymethoxy) Silane | 0.5 | 0.5 | 0.5 | 0.5 |
| Zinc Oxide | 5 | 5 | 5 | 5 |
| Dibasic Lead Phthalate | 5 | 5 | 5 | 5 |
| Paraffin Wax | 2 | 2 | 2 | 2 |
| Dicumyl Peroxide | 2 | 2 | 2 | 2 |
| Electrical Properties 16 hrs/15.6$^{o}$C Water, 3150 v/mm | | | | |
| Specific Inductive Capacitance | 3.32 | 3.85 | - | 3.50 |
| Power Factor (%) | 0.52 | 1.65 | - | 0.55 |
| Insulation Resistance Megohms/km | 3657 | 2000 | 1500 | 5000 |

TABLE 3 - Continued

| | Example 3 | Comparative Example 3A | Comparative Example 3B | Comparative Example 3C |
|---|---|---|---|---|
| | (Parts by Weight) | | | |
| 3150 v/mm, 75°C Water | | | | |
| Specific Inductive Capacitance | | | | |
| 1 Day | 3.33 | 4.16 | 6.52 | 3.80 |
| 7 Days | 3.38 | 4.45 | 6.26 | 3.85 |
| Power Factor (%) | | | | |
| 1 Day | 1.05 | 9.35 | 12.75 | 9.82 |
| 7 Days | 1.11 | 12.0 | 14.90 | 11.0 |
| Insulation Resistance, Megohms/km | | | | |
| 1 Day | 26.5 | 8.5 | 4.9 | 1.5 |
| 7 Days | 49 | 0.6 | 12.2 | 2.1 |

1. Ethylene/Propylene/1,4-Hexadiene Copolymer, weight ratio 57/40/3.

For Specific Induction Capacitance and Power Factor it is desirable for the values to be low and it is desirable for the values to remain relatively constant (or stable) as the length of time of testing increases. Thus for power factor the comparisons show a loss of electrical energy within the insulation system from one day to seven days.

Example 4

A 14 g sample of ethylene vinyl acetate (18% vinyl acetate, melt index 2.5) was added to a water-cooled Banbury mixer along with 1960 g "Kisuma-5" magnesium hydroxide used in Example 1, 28 g mercaptotoluimidazole, 14 g acetone/diphenylamine reaction product, 7 g vinyl tris(beta-ethoxymethoxy)-silane, 70 g zinc oxide, 70 g dibasic lead phthalate, 28 g paraffin wax, and 28 g dicumyl peroxide. The composition was mixed for 5 - 6 minutes. The compounded stock was then discharged at a temperature of 115-120 °C onto a two-roll rubber mill, whose roll temperature was maintained at 70-75 °C. The composition was sheeted off and test samples were prepared as described in Example 1 for testing of specific inductive capacitance, power factor, and insulation resistance. Results are shown in Table 4.

Comparative Example 4

A composition was prepared using the same ingredients, in the same amounts as described in Example 4, except that 21 g thiodiethylenebis[3,5-di t-butyl-4-hydroxy]hydrocinnamate (Irganox 1035) was used in place of the combination of mercaptotoluimidazole and acetone/diphenylamine reaction product. Test sample preparation and measurements were performed as described in Example 4. Results are shown in Table 4.

TABLE 4

| | Example 4 | Comparative Example 4 |
|---|---|---|
| | (Parts by Weight) | |
| Ethylene Vinyl Acetate (wt % Vinyl Acetate, | 100 | 100 |
| "Kisuma-5" Magnesium Hydroxide | 140 | 140 |
| Mercaptotolumidazole | 2 | - |
| Acetone/Diphenylamine Reaction Product | 1 | - |
| Irganox 1035 | | 1.5 |
| Vinyl Tris(beta-ethoxymethoxy) Silane | 0.5 | 1.5 |
| Zinc Oxide | 5 | 5 |
| Dibasic Lead Phthalate | 5 | 5 |
| Paraffin Wax | 2 | 2 |
| Dicumyl Peroxide | 2 | 2 |
| Electrical Properties | | |
| 16 hrs/150 °C water, 3150 v/mm | | |
| Specific Inductive Capacitance | 3.85 | 3.86 |
| Power Factor | 0.62 | 1.30 |
| Insulation Resistance Megohms/km | 3657 | 792 |
| 75 °C Water, 3150 v/mil | | |
| Specific Inductive Capacitance | | |
| 1 Day | 3.82 | 4.2 |
| 7 Days | 3.96 | 4.31 |
| Power Factor (%) | | |
| 1 Day | 1.16 | 7.60 |
| 7 Days | 1.25 | 9.67 |
| Insulation Resistance, Megohms/km | | |
| 1 Day | 33.83 | 10.35 |
| 7 Days | 50.6 | 11.25 |

## Claims

1. A flame retardant composition having good wet electrical stability consisting essentially of:

a) 100 parts by weight of (i) a cross-linkable ethylene/propylene copolymer, or (ii) an ethylene vinyl acetate copolymer, or (iii) an ethylene/(meth)acrylate copolymer; or 100 parts of a blend of two or more (i), (ii) or (iii);

b) Between 100 and 200 parts by weight of magnesium hydroxide having (i) a strain in the <101> direction of not more than 3.0 x $10^{-3}$, (ii) a crystallite size in the <101> direction of more than 800 A and (iii) a specific surface area of less than 20 $m^2/g$, said magnesium hydroxide being coated on the particle surface with an anionic surfactant;

c) 1-5 parts by weight of a compound selected from the class consisting of mercaptotoluimidazole, mercaptobenzimidazole, the zinc salt of mercaptotoluimidazole, and the zinc salt of mercaptobenzimidazole;

d) 0.5-5 parts by weight of the reaction product of acetone and diphenyl amine.

2. The composition of Claim 1 wherein component a) is an ethylene vinyl acetate copolymer.

3. The composition of Claim 1 wherein component a) is a cross-linkable ethylene/propylene copolymer.

4. The composition of Claim 1 wherein component c) is the zinc salt of mercaptotoluimidazole.

5. The composition of Claim 2 wherein component c) is the zinc salt of mercaptotoluimidazole.

6. The composition of Claim 3 wherein component c) is the zinc salt of mercaptotoluimidazole.

European Patent Office

# EUROPEAN SEARCH REPORT

Application Number

EP 88 11 4251

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 185 262 (DAINICHI NIHON DENSEN K.K.)<br>* Claims 1-12; example 2 *<br>--- | 1 | C 08 K 13/06<br>C 08 L 23/08<br>C 08 L 23/16 //<br>(C 08 K 13/06<br>C 08 K 5:37<br>C 08 K 5:18<br>C 08 K 9:04 ) |
| A,D | US-A-4 098 762 (MIYATA et al.)<br>* Claims 1,2 *<br>----- | 1 | |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 05-12-1988 | SCHUELER D.H.H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P0401)